# EUROPÄISCHE PATENTSCHRIFT

(11) **EP 1 275 747 B1**
(45) Veröffentlichungstag und Bekanntmachung des Hinweises auf die Patenterteilung: **23.02.2011**
(21) Anmeldenummer: 02405526.1
(22) Anmeldetag: 25.06.2002
(51) Int. Cl.: C23C 4/00, F01D 5/28

(54) **Verfahren zur Beschichtung eines Hochtemperatur-beständigen Bauteils mit einer thermischen Schutzschicht und Hochtemperatur-beständiges Bauteil**
Method for coating a high temperature resistant article with a thermal protection covering and high temperature resistant article
Procédé de revêtement d' un composant résistant à des températures élevées avec un revêtement de protection thermique et composant résistant à des températures élevées

(30) Priorität: 11.07.2001 CH 12762001
(43) Veröffentlichungstag der Anmeldung: 15.01.2003
(73) Patentinhaber: Alstom Technology Ltd, 5400 Baden (CH)
(72) Erfinder: Fried, Reinhard, 5415 Nussbaumen (CH); Neuhoff, Heinz, 79761 Waldshut-Tiengen (DE)

(56) Entgegenhaltungen:
- WO-A-99/23273
- FR-A- 2 680 120
- US-A- 4 338 360
- US-A- 4 402 992
- US-B1- 6 171 711

## Beschreibung

### Technisches Gebiet

Die Erfindung bezieht sich auf ein Verfahren zur Beschichtung eines Hochtemperatur- beständigen Bau teils mit einer thermischen Schutzschicht, bei dem das Hochtemperatur-beständige Bauteil eine mit der thermischen Schutzschicht zu beschichtende Oberfläche aufweist, an der wenigstens eine Kühlkanalöffnung vorgesehen ist, die mit einem im Inneren des Bauteils verlaufenden Kühlkanal verbunden ist. Fernerwird ein hochtemperatur- beständiges Bauteil beschrieben, das mit vorstehendem Verfahren herstellbar ist.

### Stand der Technik

Hochtemperatur-beständige Bauteile sind für den Einsatz in heissen Umgebungsbedingungen konzipiert und im wesentlichen durch die Materialwahl, aus denen sie bestehen, charakterisiert. Für die weitere Betrachtung werden als hochtemperatur-beständige Bauteile jene Komponenten einer Gasturbinenanlage in Betracht gezogen, die der heissen Gasströmung mittel- oder unmittelbar ausgesetzt sind, wie beispielsweise die Brennkammerwände sowie die Heissgasströmung umleitenden Komponenten wie Lauf- und Leitschaufelblätter innerhalb der jeweiligen Gasturbinenstufen. Selbstverständlich ist in diesem Zusammenhang auch an andere hochtemperatur-beständige Bauteile zu denken, die in anderen technischen Einsatzbereichen Verwendung finden, in denen die Bauteile ebenfalls hohen thermischen Belastungen ausgesetzt sind.

In an sich bekannter Weise werden derartige, hochtemperatur-beständige Bauteile ganz oder teilweise mit einer zusätzlichen thermischen Schutzschicht (TBC = Thermal Barrier Coatings) beschichtet, um ihre Hitzebeständigkeit weiter zu verbessern. DerEinsatz diesbezüglicher thermischer Schutzschichten ist hinlänglich bekannt und in Verbindung mit Gasturbinenkomponenten unter anderem aus den folgenden Druckschriften entnehmbar: US 5,960,249, US 5,512,382 sowie US 6,077,036.

In an sich bekannter Weise wird die thermische Schutzschicht im Rahmen eines Sprühvorganges oberflächig auf die hitzebeständigen Bauteile aufgebracht. Der Sprühvorgang erfolgt unter Umgebungsbedingungen in üblichen Beschichtungskammem. Besonders geeignet sind hierbei thermische Flammspritzverfahren, bei denen pulverförmiges Beschichtungsmaterial erhitzt und zur Schmelze gebracht wird. Die dabei anstehenden Tropfen werden anschließen mittels eines gasförmigen Trägerstrahls auf die zu beschichtende Bauteiloberfläche gerichtet, an der die Tropfen erkalten und als Schichtstruktur erstarren.

Handelt es sich bei den zu beschichtenden hitzebeständigen Bautellen um Bauteile, die über innere Kühlsysteme verfügen, die zur weiteren Kühlung ihrer Bautelloberfläche über Kühlkanalöffnungen an der Oberfläche des Bauteils münden, so ergibt sich für den Beschichtungsvorgang die Schwierigkeit, die an der zu beschichtenden Bauteiloberfläche vorhandenen Kühlkanalöffnungen nicht zu verschließen. Aus diesem Grunde werden bislang die an der Bauteiloberfläche mündenden Kühlkanäle erst nach dem Beschichtungsvorgang in das Bauteil eingebracht, was jedoch einen herstellungsbedingten Mehraufwand erfordert. Alternativ dazu werden die bereits in der Bauteiloberfläche vorhandenen Kühlkanalöffnungen zum Schutz vor einer Verschließung mit dem zu beschichtenden Material abgedeckt, was sich jedoch insbesondere bei einer großen Vielzahl derartiger Kühlkamalöffnungen als eine nicht geeignete Maßnahme erweist.

Hochmoderne luftgekühlte Leit- und Laufschaufeln einer Gasturbine weisen beispielsweise mehr als 800 Kühlkanalöffnungen an ihrer Oberfläche auf, die jeweils kleiner als 1 mm Durchmesser besitzen. Alle bisher bekannten Beschichtungstechniken, die sich entweder durch ein nachträgliches Durchstoßen der Beschichtungsschicht behelfen oder durch geeignete Maßnahmen einer Abdeckung der einzelnen Kühlkanalöffnungen vor der Beschichtung bedienen, haben sich im industriellen Meßstab als nicht praktikabel erwiesen. Auch die Möglichkeit, die Kühlkanalöffnungen größer zu gestalten, um somit einer vollständigen Verschließung der Öffnung im Wege der Beschichtung entgegenzutreten, erwiesen sich als wenig erfolgversprechend, zumal die durch den Beschichtungszugang zumindest teilweise zugesetzten größeren Kühlkonalöffnungen durch den zusätzlichen Materialabtrag um die Kühlkanalöffnung herum undefinierte Öffnungsstrukturen erhalten, wodurch der durch die Kühlkanalöffnungen erwünschte Kühleffekt erheblich in Mitleidenschaft gezogen wird.

Der Druckschrift WO 99/23273 A ist ein Beschichtungsverfahren insbesondere für die Beschichtung einer Gasturbinenschaufel mit an der Oberfläche kühlenden Kühlkanälen zu entnehmen, bei dem während der Beschichtung ein Fluid aus den Kühlkanälen herausgeleitet wird, um ein Verstopfen der Kühlkanäle zu verhindern. Diese Druckschrift wird als nächstkommender Stand der Technik betrachtet.

Ein ähnliches Beschichtungsverfahren ist der US 4,338,360 zu entnehmen, bei dem eine poröse Metallstruktur oberflächig derart beschichtet wird, so dass Oberflächenporen bzw. Kühlkanalöffnungen während des Beschichtungsvorganges ebenfalls unbedeckt bzw. unbeschichtet bleiben, zumal durch die poröse Metallstruktur während des Beschichtungsvorganges Innertgas hindurchgeleitet wird, das ein Zusetzen bzw. Verstopfen entsprechender Oberflächenöffnungen durch ein unmittelbares Abscheiden des Beschichtungsmaterials verhindert.

### Darstellung der Erfindung

Der Erfindung liegt die Aufgabe zugrunde, ein Verfahren zur Beschichtung eines Hochtemperstur-beständigen Bauteils, vorzugsweise eine Gasturbinenkomponente, wie beispielsweise eine Leit- oder Lautschaufel, mit einer thermischen Schutzschicht, wobei das Hochtemperatur-beständige Bauteil eine mit der thermischen Schutzschicht zu beschichtende Oberfläche aufweist, an der wenigstens eine Kühlkanalöffnung vorgesehen ist, die mit einem Im Inneren des Bauteils verlaufenden Kühlkanals verbunden ist, derart weiterzubilden, dass mit möglichst geringem technischen und konstruktiven Aufwand der Erhalt der Kühlkanalöffnung trotz Beschichtungsvorgang gewährleistet bleibt. Es soll erreicht werden, dass die zu beschichtende Oberfläche in gleicher Qualität mit einer thermischen Schutzschicht überzogen wird, wie es beim Stand der Technik der Fall ist. Insbesondere gilt es die Oberflächenkühlwirkung der aus den Kühlöffnungen austretenden Kühlluft nicht nachhaltig zu beinträch-tigen, ja sogar zu verbessern.

Die Lösung der der Erfindung zugrundeliegenden Aufgabe ist im Anspruch 1 angegeben. Im Anspruch 11 ist ein erfindungsgemäß ausgebildetes Bauteil selbst angegeben. Den Erfindungsgedanken vorteilhaft weiterbildende Merkmale sind Gegenstand der Unteransprüche sowie der gesamten Beschreibung unter Bezugnahme auf das Ausführungsbeispiel zu entnehmen.

Das erfindungsgemäße Verfahren zur Beschichtung eines Hochtemperatur-beständigen Bauteils mit einer thermischen Schutzschicht, bei dem das Hochtemperatur-beständige Bauteil eine mit der thermischen Schutzschicht zu beschichtende Oberfläche auf weist, an der wenigstens eine Kühlkanalöffnung vorgesehen ist, die mit einem im Inneren des Bauteils verlaufenden Kühlkanal verbunden ist, bei dem durch die Kühlkanalöffnung während der Beschichtung eine Massenströmung hindurchtritt, die ein Verschließen der Kühlkanalöffnung während des Beschichtungsvorganges verhindert, indem das auf die Oberfläche abzuscheidende Material zumindest innerhalb der Fläche der Kühlkanalöffnung regelrecht weggeblasen wird, sieht die bewusste Verwendung einer anisotropen Beschichtungstechnik vor, indem eine gerichtete, d.h. eine bevorzugte Ausbreitungsrichtung aufweisende Beschichtungsmassenströmung auf die zu beschichtende Oberfläche gerichtet ist. An sich bekannte thermische Flammspritzverfahren sind hierzu besonders gut geeignet, mit denen die Herstellung von aus MCrAIY oderTBC-Materialien bestehende Schutzschichten möglich ist. Schließlich gilt es beim erfindungsgemäßen Verfahren die Beschichtung derart vorzunehmen, dass die durch die Kühlkanalöffnung hindurchtretende Massenströmung und die Beschichtungsmassenströmung einen Winkel α ≠ 0° einschließt.

Die Erfindung macht sich die bekannte Uberlegung zunutze, während des Beschichtungsvorganges, der im wesentlichen eine Materialabscheidung auf die mit den Kühlkanalöffnungen versehene Oberfläche vorsieht, Luft durch das Kühlkanalsystem im Inneren des Hochtemperatur-beständgen Bauteils zuleiten, so dass die durch die Kühlkanalöffnungen ausströmende Luft das auf die Oberfläche abscheidende Beschichtungsmaterial vor einem Zusetzen der Kühlkanatöffnungen hindert. Auf diese Weise können bereits mit einem vollständig ausgebildeten Kühlsystem mit Kühlkanalöffnung gefertigte Bauteile, vorzugsweise Gasturbinenschaufeln, einem Beschichtungsprozess unterzogen werden, der die gesamte, mit Kühlkanalöffnungen versehene Bauteiloberfläche in einem einzigen Beschichtungsschritt zu beschichten vermag. Weder sind vorbereitende Maßnahmen zum Offenhalten der Bohrungen im Vorfeld an der Oberfläche des zu beschichtenden Bauteiles erforderlich, noch bedarf es nach dem Beschichtungsvorgang nachgeschaltete Nachbehandlungsschritte zum Wiederöffnen.

Der Erfindungssedanke setzt darauf auf, indem die Beschichlungsweise durch schrägstellung der durch die Kühlkamalöffnurig hindurchtretenden Massenströmung zur Beschlchtungsmassenströmung zu einem charakteristischen Beschichtungsschatlen führt, der sich vorzugsweise unidirektional an die Kühlkanalöffnung anschließt. Der Beschichtungsschatten, auf den im einzelnen unter Bezugnahme auf die nachstehenden Figuren eingegangen wird, wirkt sich darin aus, dass Schichtmaterial durch die lokal ablenkende Wirkung der Messenströmung auf die Beschichtungsmassenströmung die zu beschichtende Oberfläche lokal nicht erreicht. Als Resultat einer derartigen Beschichtung bleibt eine elliptisch kraterförmige Ausnehmung Innerhalb der Schutzschicht um die Kühlkanalöffnung zurück, wobei die Kühlkanalöffnung azentrisch, zur elliptischen Form der Ausnehmung angeordnet ist. Dies führt letzlich dazu, dass die elliptisch kraterförmige Ausnehmung innerhalb der Schutzschicht auf die durch die Kühlkanalöffnung hindurchtretende Kühlluft eine diffusorartige Wirkung verfügt, wodurch die Oberflächenkühlwirkung der Kühlluft auf das Bauteil selbst entscheidend verbessert wird. Auf diesen Gesichtspunkt wird in Zusammenhang mit den weiteren Ausführungsbeispielen unter Bezugnahme auf die Zeichungen noch im Einzelnen eingegangen.

Grundsätzlich ist es zur gezielten Verhinderung einer Materialablagerung im Bereich der Kühlkanalöffnungen unerheblich, ob der Massenstrom in Form beispielsweise eines Luftstromes durch den Kühlkanal von Innen durch die Kühlkanalaustrittsöffnung nach außen gerichtet ist oder umgekehrt. Da der Beschichtungsvorgang in der Regel unter Normaldruckbedingungen durchgeführt wird, ist lediglich darauf zu achten, dass ein von innen nach außen gerichteter Massenstrom eine derart hohe Strömungsgeschwindigkeit vorsieht, durch die eine Materialablagerung im Bereich der Kühlkanalöffnung gezielt verhindert wird.

Ebenso ist es möglich, durch entsprechendes Anlegen eines Unterdruckes am Kühlkanal eine Saug- bzw. Sogwirkung im Bereich der Kühlkanalöffnung zu erreichen, durch die jegliches Beschichtungsmaterial, das im Wege der Beschichtung in den Bereich der Kühlkanalöffnung gelangt, durch den Kühlkanal selbst abgesaugt wird. Ferner ist in diesem Fall darauf zu achten, dass die Saugströmung durch den Kühlkanal derart hoch gewählt ist, dass auch eine Materialablagerung an den Innenwänden des Kühlkanalsystems nicht erfolgt.

Der Massenstrom, der durch den Kühlkanal hindurch während der Beschichtung aufrechterhalten wird, kann, wie bereits vorstehend erwähnt, mittels einer Luftströmung realisiert werden. Grundsätzlich können auch weitere Gase, wie beispielsweise Stickstoff- oder Edelgase oder Gemische hieraus eingesetzt werden.

Um den vorstehend skizzierten erfindungsgemäßen Beschichtungsvorgang beispielsweise für Lauf- und Leitschaufeln für Gasturbinen in einer möglichst einfachen Weise durchführen zu können, ist eine Vorrichtung zur Beschichtung eben jener Hochtemperatur-beständigen Bauteile vorgesehen, die eine Verbindungsstruktur vorsieht, an die das zu beschichtende Bauteil lösbar fest anflanschbar ist. Die Verbindungsstruktur sieht vor, das zu beschichtende Bauteil fluiddicht mit einer Unter- oder Überdruckquelle zu verbinden, so dass über diese das in dem Bauteil vorhandene Kühlkanalsystem gezielt mit einer Massenströmung beaufschlagt werden kann. Je nach Druckeinstellung in der Unter- oder Überdruckquelle erfolgt dann ein Massenstrom, der von innen nach außen oder umgekehrt zum Bauteil durch die Kühlkanalöffnungen gerichtet ist. Eine an sich bekannte anisotrope Beschichtungsquelle, die vorzugsweise als Sprühbeschichtungsquelle, bspw. in Form einer Flammspritzpistole ausgebildet ist, sorgt für eine Materialablagerung an der gesamten, der Beschichtungsquelle ausgesetzten Oberfläche des Hochtemperatur-beständigen Bauteils mit Ausnahme der Kühlkanlöffnungen sowie den von der Massenströmung freizuhaltenden Bereichen im Strömungs- bzw. Beschichtungsschatten.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Anordnung zur Beschichtung einer mit Kühlkanalöffnungen versehenen Gasturbinenleitschaufel,
- Fig. 2: Querschnittsbild zur Darstellung des Beschichtungsvorganges,
- Fig. 3: Querschnittsbild durch Kühlkanalöffnung mit Schutzschicht und
- Fig. 4: Darstellung der elliptischen kraterförmigen Ausnehmung um eine Kühlkanalöffnung.

### Wege zur Ausführung der Erfindung, gewerbliche Verwendbarkeit

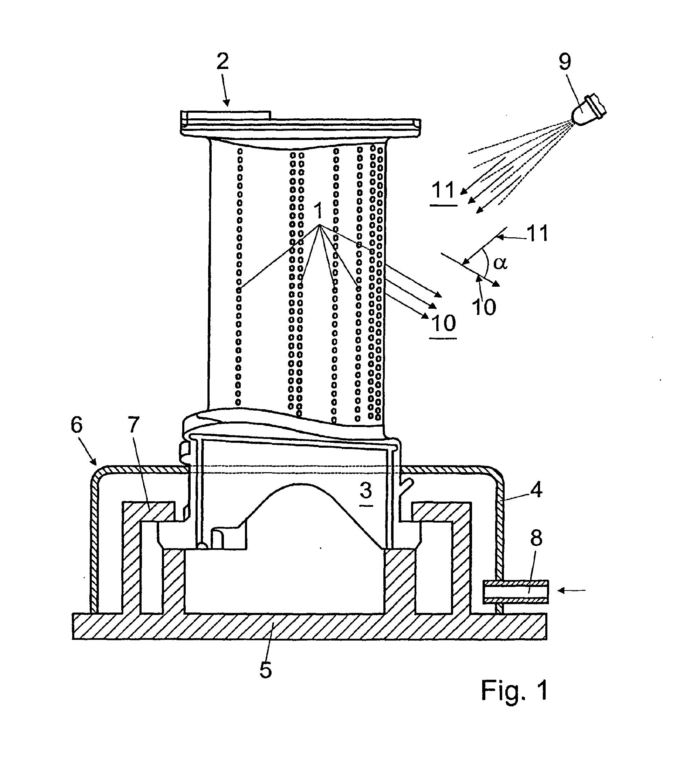

In Fig. 1 ist eine mit Kühlkanalöffnungen 1 versehene Turbinenleitschaufel 2 dargestellt, deren Leitschaufelfuß 3 in eine Verbindungsstruktur 4 einmündet. Die Verbindungsstruktur 4 weist ein gasdicht mit einer Bodenplatte 5 verbundenes Deckelelement 6 auf, das eine lösbar feste Anschlussstruktur 7 für den Leitschaufelfuß 3 umschließt. Zusätzlich mündet durch das Deckelelement 6 eine Zuleitung 8, mit der eine Unter- und Überdruckquelle verbunden ist (nicht dargestellt). Durch die Zuführleitung 8 kann nun innerhalb des Deckelelementes 6 gezielt Über- bzw. Unterdruck erzeugt werden, der durch die im Inneren der Leitschaufel 2 befindlichen Kühlkanäle, die an den Kühlkanalöffnungen 1 münden, weitergeleitet wird. Im Falle einer gezielten Luftzufuhr durch die Zuleitung 8 in das Innere des Deckelelementes 6 tritt eine Luft-Massenströmung 10 über die Vielzahl der Kühlkanalöffnungen 1 aus und sorgt auf diese Weise für einen gezielten Massenstrom 10 durch die Kühlkanalöffnungen 1. Der Beschichtungsvorgang erfolgt unter Verwendung einer Sprühvorrichtung 9, die im Bereich in der zu beschichtenden Turbinenleitschaufel 2 angebracht ist und einen vorzugsweise unidirektionalen Sprühstrahl, den sogenannten Beschichtungsmassenstrom 11 erzeugt, der unter einem Winkel _{α} auf den aus den Kühlkanalöffnungen 1 austretenenden Massenströme 10 auftrifft.

Zum schnellen Wechsel der zu beschichtenden Leitschaufeln 2 ist das Deckelelement 6 lösbar fest mit der Bodenplatte 5 verbunden, so dass ein Austausch der Leitschaufeln 2 schnell erfolgen kann. Selbstverständlich ist es auch möglich, eine Vielzahl von Leitschaufeln 2 seriell bzw. parallel in einer Verbindungsstruktur gemäß Fig. 1a zu integrieren, so dass ein gleichzeitiges Beschichten einer Vielzahl von Leitschaufeln möglich ist.

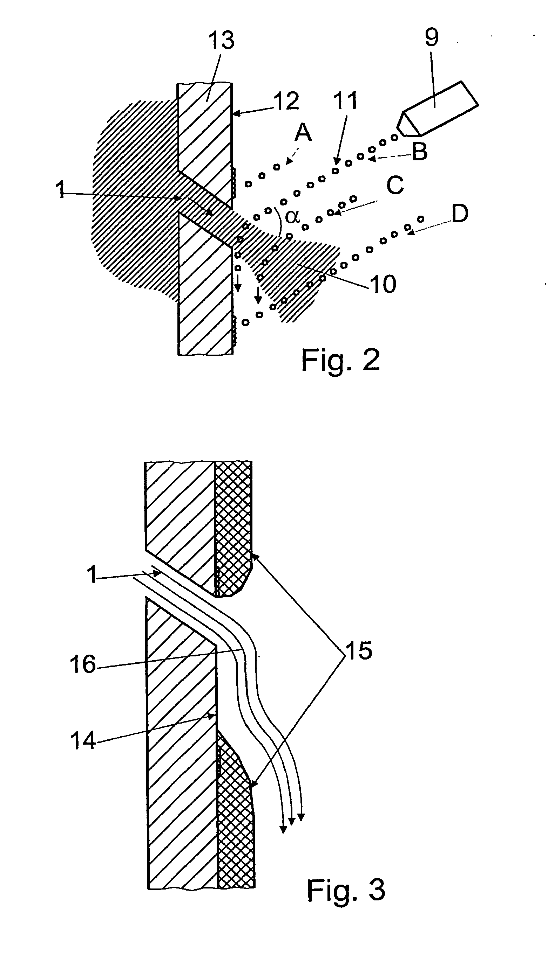

In Figur 2 ist eine Querschnittsdarstellung durch die Außenwand 13 eines Bauteils, bspw. einer Leit- oder Laufschaufel dargestellt, die von einer Kühlkanalöffnung 1 durchsetzt ist. Durch die Kühlkanalöffnung 1 strömt von der Innenseite des Bauteils Luft nach außen und bildet außerhalb des Bauteils eine gerichtete Massenströmung 10.

Zur Beschichtung der Oberfläche 12 des Bauteils ist eine anisotrope Beschichtungsquelle 9, bspw. eine Flammspritzpistole vorgesehen, aus der die Beschichtungsmassenströmung 11 unter einem vorgebbaren Winkel _{α} auf die Massenströmung 10 austritt. Der vorgebbare Winkel _{α} ist ≠ 0° zu wählen vorzugsweise 0° < α < 180°.

Bei der in Figur 2 dargestellten Beschichtungskonstellation trifft die Beschichtungsmassenströmung A unbeeinflusst auf die Oberfläche 12 auf, so dass in diesem Bereich an der Oberfläche 12 eine unbeeinflusste Schutzschichtablagerung erfolgt.

Zur Vermeidung des Eintritts von Beschichtungsmaterial in die Kühlkanalöffnung 1 ist dafür Sorge zu tragen, dass die Geschwindigkeit mit der die Massenströmung 10 aus der Kühlkanalöffnung 1 austritt, derart gewählt ist, dass Beschichtungspartikel aus der Beschichtungsquelle 9, die sich längs der Flugbahn B bewegen, vor Eindringen in die Kühlkanalöffnung 1 sicher abgelenkt werden. D. h. aber auch, dass Beschichtungspartikel längs der Flugbahn C unmittelbar über der Kühlkanalöffnung 1 ebenfalls in der in der Figur 2 dargestellten Weise abgelenkt werden. Somit bildet sich im Bereich der Ausnehmung 14 ein Spritzschatten bzw. Beschichtungsschatten aus, also ein unmittelbar an der Kühlkanalöffnung 1 angrenzender Oberflächenbereich, der keine Beschichtung erfährt. Beschichtungspartikel längs der Flugbahn D werden hingegen nur noch geringfügig oder gar nicht abgelenkt zumal in diesem Bereich der Massenstrom 10 erheblich an Strömungsgeschwindigkeit verloren hat. Gleich wie im Fall der Flugbahn A gelangt auch der Beschichtungsmassenstrom D nahezu unbeeinflusst auf die zu beschichtende Oberfläche 12.

In Figur 3 ist das Beschichtungsresultat nach Vollendung des Beschichtungsvorganges zu entnehmen. Der sich durch den Beschichtungsvorgang ausgebildete Schutzüberzug 15 grenzt einderseits oberhalb der Kühlkanalöffnung 1 unmittelbar an diese an, and ererseits ist er unterhalb der Kühlkanalöffnung 1 von dieser durch den Bereich der Ausnehmung 14, der dem Beschichtungsschatten entspricht beabstandet.

Für eine durch die Kühlkanalöffnung 1 hindurchtretende Kühlluftströmung 16 stellt die Austrittskontur der Ausnehmung 14 innerhalb der Schutzschicht 15 eine Art Diffusorwirkung dar, wodurch die Kühlluft 16 einerseits längs der Bauteiloberfläche abgelenkt und andererseits beschleunigt wird. Hierdurch wird der Kühleffekt erheblich gesteigert.

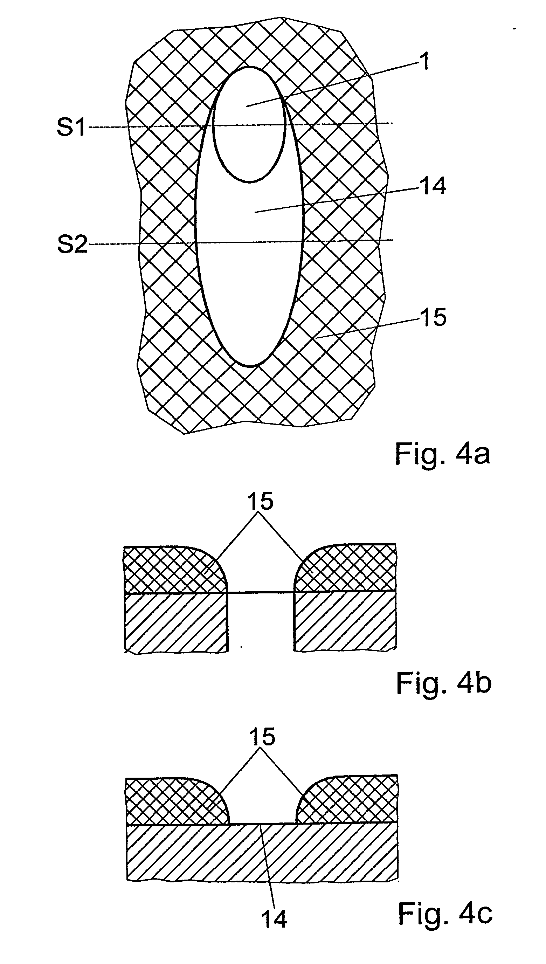

In Figur 4 a ist eine Draufsicht auf die Kühlkanalaustrittsöffnung 1 dargestellt, die von der Schutzschicht 15 umgeben ist. Bedingt durch den vorstehend erläuterten Beschichtungsschatten bildet sich angrenzend an die Kühlkanalöffnung 1 eine elliptisch kraterförmige Ausnehmung innerhalb der Schutzschicht 15 aus. In den Figuren 4 b und c sind entsprechende Schnittzeichnungen längs der Schnitte S1 und S2 zu entnehmen.

Die Form und Größe der nicht beschichteten Ausnehmung 14 übernimmt die Aufgabe, die aus der Kühlkanalöffnung 1 austretende Kühlluft in geeigneter Weise längs der Oberfläche zur Ausbildung einer Filmkühlung zu verteilen. Wegen der besonders guten Kühlwirkung unmittelbar nach Austritt der Kühlluft aus der Kühlkanalöffnung 1 kann auf eine zusätzliche Beschichtung innerhalb der Ausnehmung verzichtet werden.

### Bezugszeichenliste

- 1: Kühlkanalöffnungen
- 2: Leitschaufel
- 3: Leitschaufelfuß
- 4: Verbindungsstruktur
- 5: Bodenplatte
- 6: Deckelplatte
- 7: Anschlussstruktur
- 8: Zuleitung
- 9: Beschichtungsquelle
- 10: Massenströmung
- 11: Beschichtungsmassenströmung
- 12: Zu beschichtende Oberfläche
- 13: Außenwand
- 14: Ausnehmung, Beschichtungsschatten
- 15: Schutzschicht
- 16: Kühlluft

## Patentansprüche

1. Verfahren zur Beschichtung eines Hochtemperatur-beständigen Bauteils mit einer thermischen Schutzschicht (15), bei dem das Hochtemperatur-beständige Bauteil eine mit der thermischen Schutzschicht (15) zu beschichtende Oberfläche (12) aufweist, an der wenigstens eine Kühlkanalöffnung (1) vorgesehen ist, die mit einem im Inneren des Bauteils verlaufenden Kühlkanal verbunden ist, wobei durch die Kühlkanalöffnung (1) während der Beschichtung eine Massenströmung (10) hindurchtritt und die Beschichtung mittels einer auf die zu beschichtende Oberfläche (12) gerichteten Beschichtungsmassenströmung (11) erfolgt, die mit der durch die Kühlkanalöffnung (1) hindurchtretende Massenströmung (10) einen Winkel α ≠ 0° einschliesst, und wobei die Strömungsgeschwindigkeiten der Massenströmung (10) sowie der Beschichtungsmassenströmung (11) derart gewählt werden, dass ein Eindringen der Beschichtungsmassenströmung (11) in den Kühlkanal verhindert und die Beschichtungsmassenströmung (11) bei Hindurchtreten durch die Massenströmung (10) zumindest nahe der Kühlkanalöffnung (1) abgelenkt wird,
**dadurch gekennzeichnet, dass** die Ablenkung der Beschichtungsmassenströmung (11) durch die Massenströmung (10) derart erfolgt, dass ein begrenzter Oberflächenbereich der zu beschichtenden Oberfläche (12) unmittelbar an der Kühlkanalöffnung (1) angrenzend weitgehend unbeschichtet bleibt und einen Beschichtungsschatten bildet.

2. Verfahren nach Anspruch 1,
**dadurch gekennzeichnet, dass** die Massenströmung (10) und die Beschichtungsmassenströmung (11) einen festen Winkel α während der gesamten Beschichtung einschliessen.

3. Verfahren nach Anspruch 1,
**dadurch gekennzeichnet, dass** die Massenströmung (10) und die Beschichtungsmassenströmung (11) einen zeitlich variablen Winkel α während der gesamten Beschichtung einschliessen.

4. Verfahren nach einem der Ansprüche 1 bis 3,
**dadurch gekennzeichnet, dass** die Massenströmung (10) schräg zu der zu beschichtenden Oberfläche (12) gerichtet ist, und dass die Beschichtungsmassenströmung (11) während der gesamten Beschichtung aus einem durch die Massenströmung (10) begrenzten Halbraum auf die zu beschichtende Oberfläche (12) gerichtet wird.

5. Verfahren nach einem der Ansprüche 1 bis 6,
**dadurch gekennzeichnet, dass** die Massenströmung (10) eine gasförmige Strömung ist, die durch den Kühlkanal entweder von innerhalb des Hochtemperatur-beständigen Bauteils durch die Kühlkanalöffnung (1) nach Aussen gerichtet ist oder umgekehrt.

6. Verfahren nach einem der Ansprüche 1 bis 5,
**dadurch gekennzeichnet, dass** die Beschichtung der Oberfläche (12) des Hochtemperatur- beständigen Bauteils im Wege einer Sprühabscheidung durchgeführt wird.

7. Verfahren nach Anspruch 7,
**dadurch gekennzeichnet, dass** die Sprühabscheidung ein thermisches Flammspritzen oder Plasmaflammspritzen ist.

8. Verfahren nach einem der Ansprüche 1 bis 7,
**dadurch gekennzeichnet, dass** für die Massenströmung (10) Luft, Stickstoffgas, Edelgas oder Dampf verwendet wird.

9. Verfahren nach einem der Ansprüche 1 bis 8,
**dadurch gekennzeichnet, dass** als Hochtemperatur-beständiges Bauteil eine gekühlte Gasturbinenkomponente, insbesondere eine Gasturbinenschaufel, verwendet wird.

10. Verfahren nach einem der Ansprüche 1 bis 9,
**dadurch gekennzeichnet, dass** die Massenströmung (10) kontinuierlich durch die Kühlkanalöffnung (1) hindurchtritt.

11. Hochtemperatur-beständiges Bauteil mit einer thermischen Schutzschicht (15), die auf einer Oberfläche (12) des Bauteils mit einem Verfahren nach den Ansprüchen 1 bis 10 aufgebracht ist, an der wenigstens eine Kühlkanalöffnung (1) vorgesehen ist, die mit einem im Inneren des Bauteils verlaufenden Kühlkanal (1) verbunden ist,
**dadurch gekennzeichnet, dass** die Kühlkanalöffnung (1) die thermische Schutzschicht (15) durchragt, dass die durch die thermische Schutzschicht (15) hindurchragende Kühlkanalöffnung (1) wenigstens eine diffusorartig ausgebildete Querschnittsebene in Form einer unbeschichteten elliptischen Ausnehmung (14) aufweist, und dass die unmittelbar an der Oberfläche (12) des Bauteils befindliche Kühlkanalöffnung (1) azentrisch innerhalb der elliptischen unbeschichteten Ausnehmung (14) platziert ist.

12. Bauteil nach Anspruch 11,
**dadurch gekennzeichnet, dass** die thermische Schutzschicht aus MCrAIY oder TBC besteht.

## Claims

1. Process for coating a temperature-stable component with a thermal protection layer (15), in which the temperature-stable component has a surface (12) which is to be coated with the thermal protection layer (15) and at which there is at least one cooling-passage opening (1) which is connected to a cooling passage running inside the component, wherein during the coating a mass flow (10) emerges through the cooling-passage opening (1), and the coating takes place by means of a coating mass flow (11) directed onto the surface (12) which is to be coated, coating mass flow (11), which includes an angle α ≠ 0° with the mass flow (10) emerging through the cooling-passage opening (1), and wherein the flow velocities of the mass flow (10) and of the coating mass flow (11) are selected in such a manner that the coating mass flow (11) is prevented from penetrating into the cooling passage, and the coating mass flow (11) is diverted as it passes through the mass flow (10) at least in the vicinity of the cooling-passage opening (1), **characterized in that** the diversion of the coating mass flow (11) by the mass flow (10) takes place in such a manner that a limited surface region (14) of the surface (12) which is to be coated directly adjacent to the cooling-passage opening (1) remains uncoated and forms a coating shadow.

2. Process according to Claim 1, **characterized in that** the mass flow (10) and the coating mass flow (11) include a fixed angle α throughout the entire coating operation.

3. Process according to Claim 1, **characterized in that** the mass flow (10) and the coating mass flow (11) include an angle α which varies over the course of time throughout the entire coating operation.

4. Process according to one of Claims 1 to 3, **characterized in that** the mass flow (10) is directed obliquely with respect to the surface (12) which is to be coated, and **in that** the coating mass flow (11) is directed out of a half-space which is delimited by the mass flow (10) onto the surface (12) which is to be coated throughout the entire coating operation.

5. Process according to one of Claims 1 to 4, **characterized in that** the mass flow (10) is a gaseous flow which is directed through the cooling passage either from inside the temperature-stable component through the cooling-passage opening (1) toward the outside or vice versa.

6. Process according to one of Claims 1 to 5, **characterized in that** the coating of the surface (12) of the temperature-stable component is carried out by means of spray deposition.

7. Process according to Claim 6, **characterized in that** the spray deposition is thermal flame spraying or plasma flame spraying.

8. Process according to one of Claims 1 to 7, **characterized in that** air, gaseous nitrogen, noble gas or steam is used for the mass flow (10).

9. Process according to one of Claims 1 to 8, **characterized in that** a cooled gas turbine component, in particular a gas turbine blade or vane, is used as the temperature-stable component.

10. Process according to one of Claims 1 to 9, **characterized in that** the mass flow (10) emerges continuously through the cooling-passage opening (1).

11. Temperature-stable component with a thermal protection layer (15), which is deposited on a surface (12) of the component using a process according to Claims 1 to 10 at which surface (12) there is at least one cooling-passage opening (1) which is connected to a cooling passage (1) which runs inside the component, **characterized in that** the cooling-passage opening (1) projects through the thermal protection layer (15), **in that** the cooling-passage opening (1) which projects through the thermal protection layer (15) has at least one cross-sectional plane, in the shape of an elliptical recess (14) which has not been coated, which is designed in the manner of a diffuser, and **in that** the cooling-passage opening (1) which is located directly at the surface (12) of the component is positioned eccentrically within the elliptical recess (14) which has been coated.

12. Component according to Claim 11, **characterized in that** the thermal protection layer consists of MCrAlY or TBC.

## Revendications

1. Procédé de revêtement d'un composant résistant à des températures élevées avec un revêtement de protection thermique (15), dans lequel le composant résistant à des températures élevées présente une surface (12) à revêtir avec le revêtement de protection thermique (15), sur laquelle il est prévu au moins une ouverture de canal de refroidissement (1), qui communique avec un canal de refroidissement s'étendant à l'intérieur du composant, dans lequel un écoulement massique (10) traverse l'ouverture de canal de refroidissement (1) pendant le revêtement et le revêtement est effectué au moyen d'un écoulement massique de revêtement (11) dirigé vers la surface à revêtir (12) et qui forme un angle α ≠ 0° avec l'écoulement massique (10) circulant à travers l'ouverture de canal de refroidissement (1), et dans lequel les vitesses d'écoulement de l'écoulement massique (10) ainsi que de l'écoulement massique de revêtement (11) sont choisies de telle manière qu'une pénétration de l'écoulement massique de revêtement (11) dans le canal de refroidissement soit empêchée et que l'écoulement massique de revêtement (11) soit dévié au moins à proximité de l'ouverture de canal de refroidissement (1) par l'écoulement massique (10) lors de la traversée, **caractérisé en ce que** la déviation de l'écoulement massique de revêtement (11) par le courant massique (10) est effectuée de telle manière qu'une zone de surface limitée de la surface à revêtir (12) directement adjacente à l'ouverture de canal de refroidissement (1) reste largement sans revêtement et forme une ombre de revêtement.

2. Procédé selon la revendication 1, **caractérisé en ce que** l'écoulement massique (10) et l'écoulement massique de revêtement (11) forment un angle fixe α pendant tout le revêtement.

3. Procédé selon la revendication 1, **caractérisé en ce que** l'écoulement massique (10) et l'écoulement massique de revêtement (11) forment un angle α variable avec le temps pendant tout le revêtement.

4. Procédé selon l'une quelconque des revendications 1 à 3, **caractérisé en ce que** l'écoulement massique (10) est dirigé en oblique vers la surface à revêtir (12), et **en ce que** l'écoulement massique de revêtement (11) est dirigé pendant tout le revêtement vers la surface à revêtir (12) à partir d'un demi-espace limité par l'écoulement massique (10).

5. Procédé selon l'une quelconque des revendications 1 à 4, **caractérisé en ce que** l'écoulement massique (10) est un écoulement gazeux, qui est dirigé à travers le canal de refroidissement soit de l'intérieur du composant résistant à des températures élevées à travers l'ouverture de canal de refroidissement (1) vers l'extérieur soit inversement.

6. Procédé selon l'une quelconque des revendications 1 à 5, **caractérisé en ce que** le revêtement de la surface (12) du composant résistant à des températures élevées (1) est effectué au cours d'un dépôt par pulvérisation.

7. Procédé selon la revendication 6, **caractérisé en ce que** le dépôt par pulvérisation est une projection à chaud à la flamme ou à la flamme plasma.

8. Procédé selon l'une quelconque des revendications 1 à 7, **caractérisé en ce que** l'on utilise pour l'écoulement massique (10) de l'air, de l'azote gazeux, un gaz noble ou de la vapeur.

9. Procédé selon l'une quelconque des revendications 1 à 8, **caractérisé en ce que** l'on utilise comme composant résistant à des températures élevées un composant de turbine à gaz refroidi, en particulier une aube de turbine à gaz.

10. Procédé selon l'une quelconque des revendications 1 à 9, **caractérisé en ce que** l'écoulement massique (10) circule en continu à travers l'ouverture de canal de refroidissement (1).

11. Composant résistant à des températures élevées avec un revêtement de protection thermique (15), qui est déposé sur une surface (12) du composant par un procédé selon les revendications 1 à 10, sur laquelle il est prévu au moins une ouverture de canal de refroidissement (1), qui communique avec un canal de refroidissement (1) s'étendant à l'intérieur du composant, **caractérisé en ce que** l'ouverture de canal de refroidissement (1) traverse le revêtement de protection thermique (15), **en ce que** l'ouverture de canal de refroidissement (1) traversant le revêtement de protection thermique (15) présente au moins un plan de section transversale réalisé en forme de diffuseur sous la forme d'un évidement elliptique non revêtu (14), et **en ce que** l'ouverture de canal de refroidissement (1) se trouvant directement sur la surface (12) du composant est placée de façon décentrée à l'intérieur de l'évidement elliptique non revêtu (14).

12. Composant selon la revendication 11, **caractérisé en ce que** le revêtement de protection thermique se compose de MCrAlY ou de TBC.
